(19) Europäisches Patentamt
European Patent Office
Office européen des brevets

(11) **EP 4 776 531 A1**

(12) **EUROPEAN PATENT APPLICATION**

(43) Date of publication:
**15.07.2026 Bulletin 2026/29**

(21) Application number: **25151027.7**

(22) Date of filing: **09.01.2025**

(51) International Patent Classification (IPC):
**H04B 17/21** (2015.01)

(52) Cooperative Patent Classification (CPC):
**H04B 17/21; H04B 17/318**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **EM Microelectronic-Marin SA**
**2074 Marin (CH)**

(72) Inventors:
• **HORMATI, Ali**
  **1023 Crissier (CH)**
• **ALBINET, Xavier**
  **06330 Roquefort Les Pins (FR)**
• **BALTOLU, Anthony**
  **06200 Nice (FR)**
• **GHARIBDOUST, Kiarash**
  **1027 Lonay (CH)**

(74) Representative: **ICB SA**
**Faubourg de l'Hôpital, 3**
**2001 Neuchâtel (CH)**

(54) **RECEIVED SIGNAL STRENGTH INDICATOR (RSSI) TEMPERATURE COMPENSATION AND CALIBRATION PROCEDURE**

(57)   The present disclosure relates to a system and a method for generating a temperature compensated received signal strength indicator (RSSI) value that corresponds to a radio frequency (RF) signal and a calibration method for such a system, comprising temperature compensation data for the amplification of RF induced voltages.

## Fig. 3

**(Cont. next page)**

# Fig. 4

**Description**

Technical field

The present disclosure relates to RSSI functionality of systems and devices in the field of wireless communication systems.

Background of the invention

In a typical wireless communication system, a Received Signal Strength Indicator (RSSI) is an important building block which serves as key role in numerous applications. As described in the IEEE 802.11 wireless standard, RSSI is used to measure the signal level (or power) at the receiver chain input and this measurement can be used in numerous ways including controlling the receiver gain, adjusting the transmitted power, monitoring the link condition, and more recently for sensor positioning in wireless sensor networks.

Since RSSI accuracy plays the major role in effectiveness of the employed applications, a well-controlled and accurate RSSI is a critical specification for a wireless system and there have been many papers and patents published about RSSI concept and its accuracy.

These applications require a compact low-power solution which is robust across all temperature and can compensate any process or voltage variation (PVT resilient RSSI solution). This requires a very complicated design and/or employment of semiconductor technology with a very well controlled process accuracy and repeatability, which leads to a very costly design. For example, for the implementation of such systems for keyfobs for automotive applications, with a zero-defect manufacturing requirement, it is not possible to guarantee such a spec by relying on high precision design and design margins. As such, a comprehensive production test is required and the RSSI chain parameters (i.e., Gain, offset and ADC code) should be measured and stored in a look-up table (LUT) inside a non-volatile memory (NVM) for all the temperatures. This needs a large memory size and several measurements and read/write at different temperature (for example, M-bit LUT for attenuator plus N bit LUT for ADC at each measured temperature).

In US 2017/288795 A1 an interpolating method for the RSSI chain to reduce the look-up table size is suggested. However, such a method has a limitation in accuracy and cannot fully compensate process and temperature variation for the RSSI accuracy.

According to other proposed solutions in the field, the dedicated RSSI chain may comprise a multi-stage amplifier with a fixed gain along with the overflow detector to calculate the input signal range without saturating the output of the amplifier. Further, offset is calibrated at the RSSI measurement startup by choosing "00" for the multiplexer input. Such a solution requires extra area for the RSSI chain and the temperature compensation is not done, hereby impacting the RSSI accuracy over temperature variations.

It is therefore a goal of the present disclosure to improve accuracy of RSSI devices despite noise, temperature and non-linearity effects, while solving the above-mentioned problems.

Summary of the invention

In one aspect of the current disclosure there is provided a system for generating a temperature compensated received signal strength indicator (RSSI) value that corresponds to a radio frequency (RF) signal, wherein the system comprises a RF antenna, wherein the RF antenna is configured to generate an induced voltage and the induced voltage is received by a RF signal chain unit, the RF signal chain unit comprising an Automatic Gain Control Unit, the Automatic gain control unit being configured to generate an amplified signal and compensation levels based on the induced voltage and configured to generate corrected signal levels based on the amplified signal and configured to generate amplitude data; a digital processing unit configured to receive compensation levels from the amplified signal, wherein gain data is generated based on the compensation levels, the gain data comprising temperature compensation, wherein the RF signal chain unit is configured to receive the gain data from the digital processing unit, and wherein the automatic gain control unit is configured to amplify the received induced voltage based on the received gain data, and a Received Signal Strength Indicator (RSSI) unit configured to receive the amplitude data and to generate a RSSI value based on the amplitude data.

According to a further aspect, the system comprises a plurality of RF Receivers, wherein each RF receiver comprises a RF antenna and wherein each RF antenna is connected to a dedicated RF signal chain unit (34a, 34b, 34c).

According to a further aspect, the RSSI unit comprises a multiplexer configured to receive amplitude data generated by the dedicated RF signal chain unit.

According to a further aspect, the gain data comprising temperature compensation further comprises the digital processing unit being configured to receive a RSSI unit temperature and determine at least one of a gain value and an offset value at the received RSSI unit temperature.

According to a further aspect, determining the gain value comprises interpolating between a gain value at a low temperature and a high temperature.

According to a further aspect, determining the offset value comprises interpolating between an offset value at a low temperature and a high temperature.

According to a further aspect, a method for generating a temperature compensated received signal strength indicator (RSSI) value that corresponds to a radio frequency (RF) signal is provided, the method comprising a RF signal chain unit receiving an induced voltage generated by an RF antenna; the RF signal chain unit comprising an Automatic Gain Control Unit, wherein the Automatic Gain Control Unit generates an amplified signal and compensation levels based on the induced voltage and generates corrected signal levels based on the amplified signal and generates amplitude data; a digital processing unit receiving compensation levels from the amplified signal, wherein gain data is generated based on the compensation levels, the gain data comprising temperature compensation; the RF signal chain unit receiving the gain data from the digital processing unit, wherein the automatic gain control unit amplifies the received induced voltage based on the received gain data, and a Received Signal Strength Indicator (RSSI) unit receiving the amplitude data and generating a RSSI value based on the amplitude data.

According to a further aspect, the method further comprises the digital processing unit receiving a RSSI unit temperature and, wherein the digital processing unit is configured to determine at least one of an offset data and a gain data at the received RSSI unit temperature.

According to a further aspect, a method of calibration of a system of the previous aspects is provided, wherein the method comprises generating a temperature list comprising a plurality of temperature values and a gain decoding list comprising a plurality of gain values spanning the operation values used in RF Signal Chain unit; selecting a temperature from the temperature list and setting the RSSI unit to the selected temperature and selecting a gain from the gain decoding list; wherein for each temperature value and gain value the method further comprises generating at least two RF amplitudes; measuring the input to the RSSI unit; determining a gain value based on the RF amplitudes and the input to the RSSI unit; storing the gain value; generating temperature compensated gain data based on the stored gain values.

According to a further aspect, measuring the input to the RSSI unit comprises measuring over a plurality of ripple periods.

According to a further aspect, wherein for each temperature value and gain value, the method further comprises determining an offset value, wherein gain and offset are determined by fitting the at least two ADC input measurements with respect to the RF amplitudes set.

According to a further aspect, the method further comprises for each temperature value and gain value, determining an offset and a gain value, wherein gain and offset are determined by fitting the at least two ADC input measurements with respect to the RF amplitudes set.

According to further aspects of the present disclosure, a computer readable storage medium and a computer program product comprising instructions which, when executed by a computer system, cause the computer to carry out the method of the previous aspects are provided.

## Brief description of the drawings

In the following, embodiments of the current disclosure are illustrated by making reference to the drawings, in which:

- Figure 1 shows a simplified Received Signal Strength Indicator according to the prior art.

- Figure 2 shows a further simplified Received Signal Strength Indicator chain block according to the prior art.

- Figure 3 shows a system according to an embodiment of the present disclosure.

- Figure 4 shows a RF Signal Chain unit according to an embodiment of the present disclosure.

- Figure 5 shows a schematic workflow of a method according to an embodiment of the present disclosure.

- Figure 6 shows a schematic workflow of a method according to a further embodiment of the present disclosure.

## Detailed description of the invention

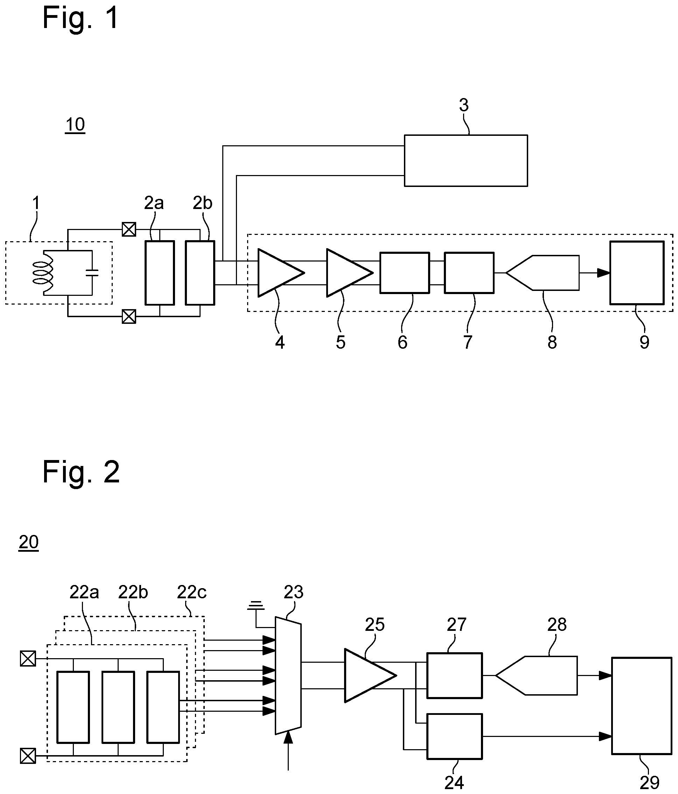

In Figure 1, a simplified Received Signal Strength Indicator (RSSI) 10 according to the prior art is shown. Figure 1 shows a simplified block diagram of a RSSI block according to the prior art. The input signal from radio frequency (RF) antenna 1 is provided to the chip and a dedicated RSSI chain is designed so that it can accurately set the required gain and amplify the received signal to the desired level for peak-detectors.

The input signal from the RF antenna 1 goes through an electrostatic discharge (ESD) protection unit 2a and a M-bits attenuator 2b before entering the dedicated RSSI block chain shown in dotted lines together with the signal received from RF Receiver Chain unit 3, delivering the Rx telegram reception chain. Once the signal is in the RSSI block chain, Low Noise Amplifier 4, Variable Gain Amplifier 5 and Low Pass Filter 6 modulate, i.e. amplify and filter, the signal before delivering it to a peak-detector output 7, which is a DC voltage, delivers in turn to an analog-to-digital (ADC) converter 8 with sufficient resolution (N bits of resolution) and the digital output of ADC is processed by digital signal processor (DSP) engine 9 to calculate the signal strength based on the ADC measurement.

As explained already, this setting requires a very complicated design and/or employment of semiconductor technology with a very well controlled process accuracy and repeatability, which leads to a very costly design and comprehensive production tests, wherein the RSSI chain parameters (i.e., Gain, offset and ADC code) should be measured and stored in look-up table (LUT) inside a non-volatile memory (NVM) for all the temperatures. This needs a large memory size and several measurements and read/write at different temperature (for example, M-bit LUT for attenuator plus N bit LUT for ADC at each measured temperature).

In Figure 2 a further simplified Received Signal Strength Indicator chain block according to the prior art is shown. According to figure 2, a dedicated RSSI chain is shared among three channels (reception on 22a, 22b, 22c at the same time) through a multiplexer 23. The dedicated RSSI chain uses a multi-stage amplifier 25 with a fixed gain along with the overflow detector 24 to calculate the input signal range without saturating the output of the amplifier. Analogously as in previous example, the amplifier output is input to a peak detector 27 which in turn delivers to an analog-to digital (ADC) converter 28, wherein the output of ADC converter 28 is processed by DSP engine 29. In this case, as explained before, offset is calibrated at the RSSI measurement startup by choosing "00" for the multiplexer input. This embodiment requires extra area for the RSSI chain and the temperature compensation is not done, hence, the RSSI accuracy can be impacted across the temperature ranges for intended use.

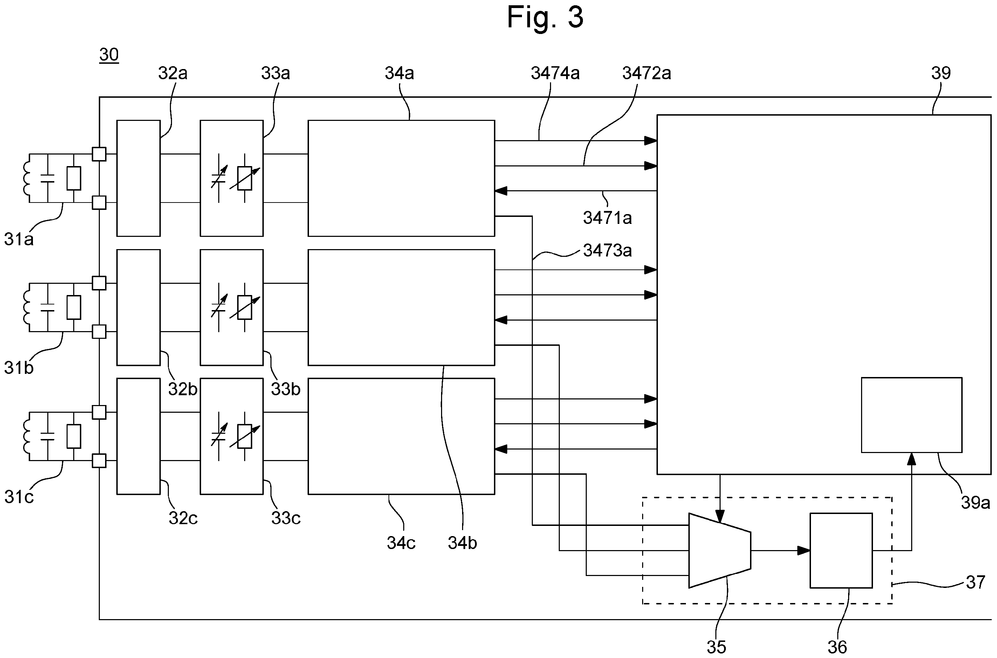

Figure 3 shows a system 30 according to an embodiment of the present disclosure. According to this embodiment, system 30 comprises three channel RF Receivers, wherein each is formed by a RF antenna 31, connected to an electrostatic discharges (ESD) unit 32, which in turn is connected to a Q-factor adjustment unit 33 and the latter is then connected to a RF Signal Chain unit 34. The RF antenna generates an induced voltage, which is, directly or indirectly, received by the RF signal chain unit 34.

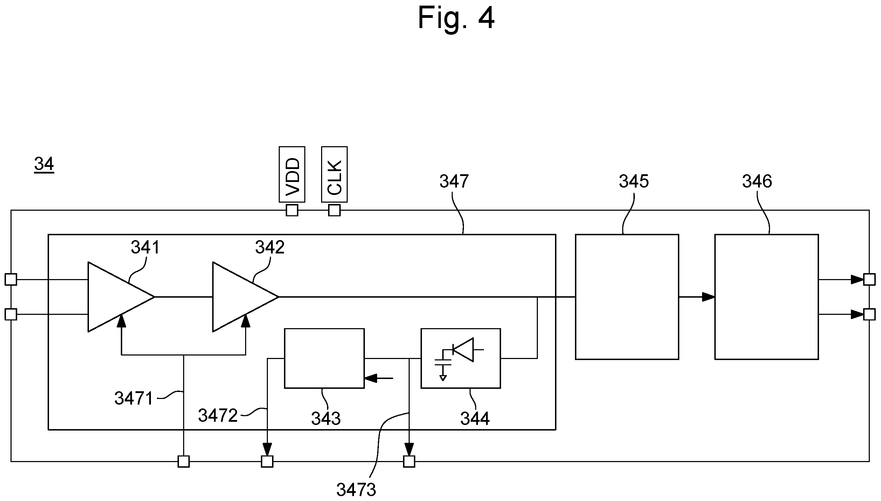

System 30 further comprises a Received Signal Strength Indicator (RSSI) unit 37 and a digital processing unit 39, wherein the digital processing unit 39 further comprises a Digital RSSI processing unit 39a. As it will be further described below with reference to Figure 4, RF Signal Chain 34a, and correspondingly 34b and 34c, deliver compensation data signal 3472a and clock and data signals 3474a to the digital processing unit 39 and amplitude data 3473a to the RSSI unit 37.

Digital processing unit comprises as customary in the practice, at least one microprocessor or microcontroller unit, at least one of a volatile and a non-volatile memory as well as further units dedicated to data transmission as customary in the field. The RSSI unit 37 comprises a multiplexer 35 receiving the plurality of amplitude signals 3473 from each RF Signal Chain unit 34 and an analog-digital converter (ADC) 36.

According to a further embodiment, the analog-digital converter 36 may comprise a low pass filter (LPF) for ripple removal.

According to an embodiment, the system 30 is designed for low-frequency sensor networks, i.e. 20 KHz-140 KHz. According to a further embodiment, a keyfob comprising a system 30 is envisaged within the disclosure of the present application.

Figure 4 shows a RF Signal Chain unit 34 according to an embodiment of the present disclosure. RF Signal Chain Unit 34 comprises an Automatic Gain Control (AGC) unit 347, wherein the Automatic Gain Control unit 347 comprises an amplifying unit 341 comprising a Low Noise Amplifier (LNA) and a Low Pass Filter (LPF), wherein the amplifying unit is connected to a Variable Gain Amplifier (VGA) 342.

According to a further embodiment, the RF signal chain unit comprises a multi-stage amplifier/attenuator unit, wherein the multi-stage amplifier/attenuator unit is controlled by the Automatic Gain Control Unit. Further, the Automatic Gain Control Unit may be configured to generate an amplified signal based on the induced voltage and configured to generate corrected signal levels based on the amplified signal, wherein the Automatic Gain Control Unit is further configured to generate amplitude data. Both the amplifying unit 341 and the VGA unit receive gain data from digital processing unit 39.

According to a further embodiment, gain data comprises at least one of a gain value and an offset value.

RF Signal Chain unit 34 further comprises a compensation unit 343, which delivers the compensation data signal 3472 to the digital processing unit 39. Rectifier 344 process the output of VGA unit 342 and outputs amplitude data 3473 from the VGA unit 342 to the compensation unit 343 as well as to the digital processing unit 39. VGA unit 342 output is as well fed to a carrier recovery unit 345. According to a further embodiment, carrier recovery unit may be represented by a Costas loop unit. Carrier recover unit 345 is then further connected to a clock and data extractor 346, which in turn delivers clock and data signals 3474 to the digital processing unit 39.

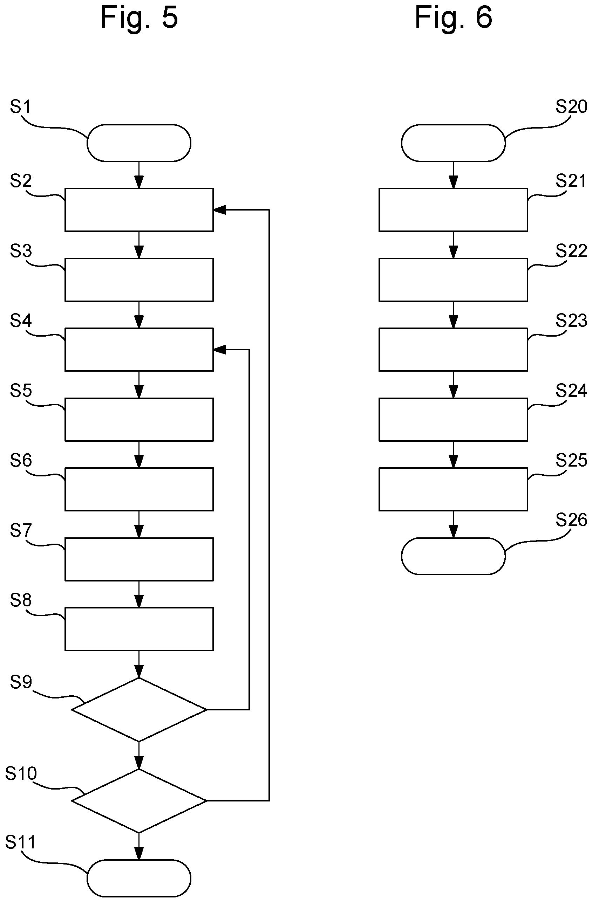

The calibration method at trim time according to an embodiment of the current disclosure will be described below with reference to Figure 5. In order to improve the RSSI accuracy, the process is to measure RSSI gains and offsets in production time and use them to correct the gain and offset variation over temperature. Since the trimming procedure described below is done without any antenna attached, the input capacitance of the receiver front-end is designed such that its value is effectively fix and has minimal dependence on the gain code of the receiver and the input level.

According to a further embodiment, the calibration method may further comprise a further interpolation/extrapolation method to improve the accuracy of RSSI gains and offsets measured in production time.

S1 denotes the start of the calibration method according to an embodiment of the current disclosure. In this step, the temperature list data and gain decoding list data required for the calibration may be generated, wherein the temperature list data is configured to span operating temperatures of the RSSI unit 37. Correspondingly gain decoding list data may comprise the usual values spanning the operation values used in the RF Signal Chain Unit 34. In a further embodiment, the temperature list data comprises temperature data spanning from -40 C to 80 C with a predefined calibration temperature or temperature step sizes of 20 C, preferably 10 C or more specifically 5 C. In S2, the method comprises setting a temperature from the previously generated temperature list data.

In S2, a temperature from the temperature list data is selected and the RSSI unit is set to the selected temperature. According to a further embodiment, setting the RSSI unit to the selected temperature comprises at least one of setting a room temperature and a test chamber temperature.

In S3, the method comprises measuring the room temperature and storing it to a non-volatile memory of the of the digital processing unit 39. According to a further embodiment, measuring the room temperature and storing it comprises measuring a plurality of room temperature readings and averaging the plurality of room temperature readings, further comprising storing the average value of the plurality of room temperature readings. According to a further embodiment, measuring the room temperature comprises using at least one of an on-chip temperature sensor, a room temperature sensor, or a test chamber temperature sensor.

In S4, the method comprises setting a new gain decoding value from the gain decoding list data.

In S5, the method comprises setting at least two RF amplitudes, in order to obtain at least two Input values at the input of ADC unit 36. According to a further embodiment, setting at least two RF amplitudes comprising setting it such that the at least two input values are generated between 450 mV and 950 mV with a separation of at least 200mV.

In S6, the method further comprises measuring the at least two ADC inputs to the ADC unit 36. According to a further embodiment, measuring the at least two ADC inputs to the ADC unit 36 comprises measuring each of the at least two ADC inputs over a plurality of integer ripple periods.

According to this embodiment, ripples generated by the rectification process of the ADC input signal for the RSSI measurements are able to be removed. According to a further embodiment, the method further comprises measuring over 9*N, 14*N or 18*N ripple periods, wherein the ripple periods are defined depending on the carrier frequency of the RF signal. Following this embodiment, at least one of a gain value and an offset value are determined with minimal effect from both thermal noise and ripple error.

In S7, the method further comprises determining at least one of a gain and an offset value based on the RF amplitudes and the ADC input. According to an embodiment, gain and offset are determined by fitting the at least two ADC input measurements determined in S7, with respect to the RF amplitudes set in S5.

In S8, the method further comprises storing the determined at least one of a gain and an offset values in non-volatile memory of the digital processing unit 39. According to a further embodiment, at least one of gain values and offset values may be stored as a 32-bit floating values. Following this embodiment, the stored value can cover the 100dB dynamic range of the system and the 1% typical RSSI accuracy requirement.

In S9, the method further comprises determining if all gains from the gain decoding list data have been analysed, in which case, when positive, the method moves to S10. If not all gains have been analysed, the method moves back to S4.

In S10, the method further comprises if all temperatures from the temperature list data have been analysed. As before, if not all temperatures have been analysed, the method moves back to S2, whereas if all temperatures have been analysed, the method moves forward to the final and ending step S11.

Figure 6 shows a further in-field calibration method for generating temperature compensated gain and offset according to an embodiment of the current disclosure.

In S20, the method comprises initiating the calibration procedure and moves to S21, wherein the method comprises measuring the temperature of the RSSI unit 37. According to a further embodiment, the method further comprises storing it to a non-volatile memory of the digital processing unit 39. According to a further embodiment, measuring the RSSI unit 37 temperature and measuring the room temperature comprises using at least one of an on-chip temperature sensor, a dedicated temperature sensor, or a test chamber temperature sensor.

In S22, the method further comprises running the RSSI algorithm in RSSI unit 37 by the digital processing unit 39, hereby determining the gain values as generated in the RF Signal Chain unit 34a, 34b and 34c, i.e. in all three channels and the respective input values to the ADC unit 36. The method further comprises storing the gain values and input values in digital processing unit 39. According to a further embodiment, S22 can be carried out a plurality of times, hereby determining a plurality of gain values and input values, wherein an average of the plurality of values is determined in order to remove ripple noise.

In S23, the method comprises determining offset values at the temperature measured in S21 for each of the RF Signal Chain unit 34a, 34b and 34c, analogously to the step S7 explained above.

In S24, the method comprises determining gain values at the temperature measured in S21 for each of the RF Signal Chain unit 34a, 34b and 34c, analogously to the step S7 explained above.

In S25, the calibration procedure comes to an end.

In a further embodiment, when two temperature points are determined, determining the gain fitting over temperature comprises assuming that the curve is linear and a linear interpolation between two points is carried out.

$$y = ax + b$$

$$a = \frac{y_1 - y_2}{x_1 - x_2}$$

$$b = \frac{y_2 x_1 - y_1 x_2}{x_1 - x_2}$$

wherein y denotes gain and x denotes temperature.

In a further embodiment, three temperature points are determined, and determining the gain fitting over temperature comprises assuming that the curve is linear and a linear interpolation between three points is carried out.

$$y = ax + b$$

$$detM = 3(x_1^2 + x_2^2 + x_3^2) - (x_1 + x_2 + x_3)^2$$

$$a = \frac{3(x_1 y_1 + x_2 y_2 + x_3 y_3) - (x_1 + x_2 + x_3)(y_1 + y_2 + y_3)}{detM}$$

$$b = \frac{(x_1^2 + x_2^2 + x_3^2)(y_1 + y_2 + y_3) - (x_1 + x_2 + x_3)(x_1 y_1 + x_2 y_2 + x_3 y_3)}{detM}$$

wherein y denotes gain and x denotes temperature again.

In a further embodiment, determining a gain and an offset value comprises fitting a parabola due to the input offset curves shapes. This can be done according to two further embodiments explained below.

According to the first further embodiment, Interpolation is done through two points with a further extra condition. According to a further embodiment, the extra condition is setting a point with zero derivative at a predetermined temperature (e.g. at -35 degrees). Following this embodiment, the equations described above are modified to read as follows:

$$y = ax^2 + bx + c$$

The zero derivative condition imposes the condition:

$$b = -2ma$$

And therefore the equations can be simplified as:

$$y = a(x^2 - 2mx) + c$$

The coefficients can then be determined as follows:

$$a = \frac{y_1 - y_2}{(x_1 - x_2)(x_1 + x_2 - 2m)}$$

$$c = \frac{y_2 x_1 (x_1 - 2m) - y_1 x_2 (x_2 - 2m)}{(x_1 - x_2)(x_1 + x_2 - 2m)}$$

According to the second further embodiment, if three points are to be determined at calibration time, the equations set up above can be modified as follows. Following the above consideration of the input offset curves, they are assumed to fit based on three points to find its coefficients the three coefficients of the parabola can be determined as follows:

$$detM = x_1^2 (x_2 - x_3) - x_1 (x_2 - x_3)(x_2 + x_3) + x_2 x_3 (x_2 - x_3)$$

$$a = \frac{y_1 (x_2 - x_3) + y_2 (x_3 - x_1) + y_3 (x_1 - x_2)}{detM}$$

$$b = \frac{y_1 (x_3^2 - x_2^2) + y_2 (x_1^2 - x_3^2) + y_3 (x_2^2 - x_1^2)}{detM}$$

$$c = \frac{y_1 x_2 x_3 (x_2 - x_3) + y_2 x_1 x_3 (x_3 - x_1) + y_3 x_1 x_2 (x_1 - x_2)}{detM}$$

While these interpolation/extrapolation embodiments have been described in detail with respect to the specific cases of a linear or a quadratic example of a parabola, wherein the determination conditions are set by two or three temperature points, corresponding equations can be derived from similar fitting procedures with respect to other basic curve fitting tools. The scope of the current disclosure is not strictly limited to the above specific examples.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details, representative apparatus and method, and illustrative example shown and described. Accordingly, the detailed description thereof should not be construed as restrictive in all aspects but considered as illustrative. The scope of the disclosure should be determined by reasonable interpretation of the appended claims and all changes that come within the equivalent scope are included in the scope of the current disclosure.

The process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously, in parallel, or concurrently. Various methods described herein may be practiced by combining one or more machine-readable storage media containing the code according to the present disclosure with appropriate standard electronic hardware to execute the code contained therein.

## Claims

1. System (30) for generating a temperature compensated received signal strength indicator (RSSI) value that corresponds to a radio frequency (RF) signal, wherein the system comprises:

   - a RF antenna (31), wherein the RF antenna (31) is configured to generate an induced voltage and the induced voltage is received by a RF signal chain unit (34), the RF signal chain unit (34) comprising an Automatic Gain Control Unit (347), the Automatic gain control unit being configured to generate an amplified signal and compensation levels based on the induced voltage and configured to generate corrected signal levels based on the amplified signal and configured to generate amplitude data;

- a digital processing unit (39) configured to receive compensation levels from the amplified signal, wherein gain data is generated based on the compensation levels, the gain data comprising temperature compensation, wherein the RF signal chain unit (34) is configured to receive the gain data (3471) from the digital processing unit (39), and wherein the automatic gain control unit (347) is configured to amplify the received induced voltage based on the received gain data; and

- a Received Signal Strength Indicator (RSSI) unit (37) configured to receive the amplitude data (3473) and to generate a RSSI value based on the amplitude data (3473).

2. System according to claim 1, wherein the system comprises a plurality of RF Receivers, wherein each RF receiver comprises a RF antenna (31a, 31b, 31c), and wherein each RF antenna is connected to a dedicated RF signal chain unit (34a, 34b, 34c),

3. System according to claim 2, wherein the RSSI unit (37) comprises a multiplexer (35) configured to receive amplitude data generated by the dedicated RF signal chain unit (34a, 34b, 34c).

4. System according to any one of claims 1 to 3, wherein the gain data comprising temperature compensation further comprises the digital processing unit (39) being configured to:

   - receive a RSSI unit temperature;
   - determine at least one of a gain value and an offset value at the received RSSI unit temperature.

5. System according to claim 4, wherein determining the gain value comprises interpolating between a gain value at a low temperature and a high temperature.

6. System according to claim 4, wherein determining the offset value comprises interpolating between an offset value at a low temperature and a high temperature.

7. Method for generating a temperature compensated received signal strength indicator (RSSI) value that corresponds to a radio frequency (RF) signal, the method comprising:

   - a RF signal chain unit (34) receiving an induced voltage generated by an RF antenna (31);
   - the RF signal chain unit (34) comprising an Automatic Gain Control Unit (347), wherein the Automatic Gain Control Unit generates an amplified signal and compensation levels based on the induced voltage and generates corrected signal levels based on the amplified signal and generates amplitude data;
   - a digital processing unit (39) receiving compensation levels from the amplified signal, wherein gain data is generated based on the compensation levels, the gain data comprising temperature compensation;
   - the RF signal chain unit (34) receiving the gain data (3471) from the digital processing unit (39), wherein the automatic gain control unit (347) amplifies the received induced voltage based on the received gain data, and
   - a Received Signal Strength Indicator (RSSI) unit receiving the amplitude data (3473) and generating a RSSI value based on the amplitude data.

8. A method according to claim 7, the method further comprising the digital processing unit receiving a RSSI unit temperature and the gain data comprising temperature compensation comprises determining at least one of a gain value and an offset value at the received RSSI unit temperature.

9. A method of calibration of a system according to claim 1, wherein the method comprises:

   - generating a temperature list comprising a plurality of temperature values and a gain decoding list comprising a plurality of gain values spanning the operation values used in RF Signal Chain unit (34);
   - selecting a temperature from the temperature list and setting the RSSI unit (37) to the selected temperature and selecting a gain from the gain decoding list;
   - wherein for each temperature value and gain value the method further comprises:

      • generating at least two RF amplitudes;
      • measuring the input to the RSSI unit (37);
      • determining a gain value based on the RF amplitudes and the input to the RSSI unit (37);
      • storing the gain value;

- generating temperature compensated gain data based on the stored gain values.

10. A method of calibration according to claim 9, measuring the input to the RSSI unit comprising measuring over a plurality of ripple periods.

11. A method of calibration according to claim 9, wherein for each temperature value and gain value, the method further comprises determining an offset value, wherein gain and offset are determined by fitting the at least two ADC input measurements with respect to the RF amplitudes set.

12. A method of calibration according to claim 9, wherein for each temperature value and gain value, the method further comprises determining an offset and a gain value, wherein gain and offset are determined by fitting the at least two ADC input measurements with respect to the RF amplitudes set.

13. A computer-readable storage medium comprising instructions which, when executed by a computer system, cause the computer to carry out the method of any one of the claims 6 to 12.

14. A computer program product comprising instructions which, when the program is executed by a computer system, cause the computer to carry out the method of any one of the claims 6 to 12.

15. Keyfob comprising a system according to any one of claims 1 to 6.

Fig. 1

Fig. 2

Fig. 3

# Fig. 4

EP 4 776 531 A1

# Fig. 5

# Fig. 6

Europäisches
Patentamt

European
Patent Office

Office européen
des brevets

## EUROPEAN SEARCH REPORT

**Application Number**

EP 25 15 1027

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/073450 A1 (KIM SEUNG-HWAN [KR] ET AL) 7 April 2005 (2005-04-07) | 1-10, 13-15 | INV. H04B17/21 |
| A | * paragraph [0017] - paragraph [0027]; figure 3 * | 11,12 | |
| A | US 2015/207577 A1 (DELBECQ DOMINIQUE [FR] ET AL) 23 July 2015 (2015-07-23) * the whole document * | 1-15 | |
| A | CLAYTON M ET AL: "AN ECONOMICAL IMPLEMENTATION OF ACCURATE AND REPEATABLE RSSI IN A WIRELESS SYSTEM", MOTOROLA TECHNICAL DEVELOPMENTS, MOTOROLA INC. SCHAUMBURG, ILLINOIS, US, vol. 39, 1 September 1999 (1999-09-01), pages 186-188, XP000930966, ISSN: 0887-5286 * the whole document * | 1-15 | |

**TECHNICAL FIELDS SEARCHED (IPC)**

H04B

The present search report has been drawn up for all claims

| Place of search | Date of completion of the search | Examiner |
|---|---|---|
| The Hague | 28 May 2025 | Boetzel, Ulrich |

EPO FORM 1503 03.82 (P04C01)

## EP 4 776 531 A1

## ANNEX TO THE EUROPEAN SEARCH REPORT
## ON EUROPEAN PATENT APPLICATION NO.

EP 25 15 1027

28-05-2025

| Patent document cited in search report | Publication date | Patent family member(s) | | Publication date |
|---|---|---|---|---|
| US 2005073450 A1 | 07-04-2005 | KR | 20050032810 A | 08-04-2005 |
| | | US | 2005073450 A1 | 07-04-2005 |
| US 2015207577 A1 | 23-07-2015 | US | 2015207577 A1 | 23-07-2015 |
| | | WO | 2014041387 A1 | 20-03-2014 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017288795 A1